# EUROPEAN PATENT APPLICATION

(11) **EP 3 409 861 A1**
(43) Date of publication of application: **05.12.2018**
(21) Application number: 18163749.7
(22) Date of filing: 23.03.2018
(51) Int. Cl.: E04C 2/32, E04B 1/80

(54) **THERMOACOUSTIC SOUNDPROOFING PANEL**

(30) Priority: 30.05.2017 IT 201700058435
(71) Applicant: Santi, Walter, 31033 Castelfranco Veneto (TV) (IT)
(72) Inventor: Santi, Walter, 31033 Castelfranco Veneto (TV) (IT)
(74) Representative: Modiano, Micaela Nadia

(57) **Abstract**

A thermoacoustic soundproofing panel, constituted by at least one first mat and one second mat (2, 3), each provided with individual and distinct pockets (4), which are mutually adjacent and are filled with an inert material (5); the first mat and second mat (2, 3) being mutually adjacent and mutually offset along a horizontal axis (8) and/or a vertical axis (9).

## Description

The present invention relates to a thermoacoustic soundproofing or sound insulation panel which is used for vertical walls, such as walls of dwellings, or partitions or movable walls, or for horizontal floor-mounted walls, with a footsteps noise prevention function, or for flat or inclined roofs, or for fire doors.

Use can also occur in the industrial sector in which there are still machines with a high dB index, by covering the various enclosures with the panel.

Acoustic panels are currently known which are usually provided by means of substantially rigid and flexible materials and are used for example to provide noise barriers.

Soundproofing acoustic panels are known which are constituted substantially by two rigid half-shells made of metallic material, which are mutually coupled with the interposition of a layer of rock wool or glass wool or of two sheets of rubber or cross-linked expanded polyethylene with, at the center, a 3/10- to 5-mm lead lamina; furthermore, loaded rubbers with high relative density, or rubbers from recycled tire material with thicknesses from 1 to 5 cm, are used; these, in case of fire, generate highly dangerous fumes.

Furthermore, these panels cannot be used in dwellings or in furniture or in flat or inclined roofs owing to their composite structure, which leads to high thicknesses and makes them bulky, to the difficulty in installation and their high overall cost, which also comprises the cost of storage and transport, both of which are high due to their bulky structure.

Another drawback consists in that their laying entails an adjacent arrangement of multiple panels which cannot be overlapped and thus create regions in which sound waves may not be blocked.

Furthermore, these panels of the known type are not incombustible, and especially the ones made of rock or glass wool are not recyclable.

Panels made of synthetic material are also known which are used to provide false ceilings or to cover walls and on one of the faces of said panels there are surfaces which have variously irregular profiles in order to reflect an incident wave with a preset reference frequency; however, this solution is inherently limited to a specific incident sound wave and therefore finds specific and limited uses.

The aim of the present invention is therefore to solve the described technical problems, eliminating the drawbacks of the cited background art and thus providing a thermoacoustic soundproofing panel which, in addition to having optimum characteristics of absorption of all the sound waves that are incident thereon, is at the same time applicable rapidly and simply also within civil or industrial dwellings or roofs, adapting to the shape of the places in which it is laid.

Another important object of the invention is to obtain a thermoacoustic soundproofing panel that has modest storage and transport costs and can be installed rapidly and simply.

Another object is to obtain a thermoacoustic soundproofing panel which combines with the preceding characteristics that of being easy to handle and install even by personnel that is not particularly trained.

Another object is to obtain a thermoacoustic soundproofing panel which combines the preceding characteristics with that of avoiding the forming of regions in which noise may penetrate.

Another object of the invention is to obtain a thermoacoustic soundproofing panel that has high fire resistance characteristics.

A still further object is to provide a thermoacoustic soundproofing panel that is structurally simple and has modest manufacturing, storage and transport costs.

This aim and these and other objects which will become better apparent hereinafter are achieved by a thermoacoustic soundproofing panel, comprising at least one first mat and one second mat, each provided with individual and distinct pockets, which are mutually adjacent and are filled with an inert material, said at least one first mat and one second mat being mutually adjacent and mutually offset along a horizontal axis and/or a vertical axis.

Further characteristics and advantages of the invention will become better apparent from the detailed description of a particular but not exclusive embodiment of the panel according to the invention, illustrated by way of nonlimiting example in the accompanying drawings, wherein:
Figure 1 is a lateral perspective view of the panel, showing the composition of the two mats;
Figure 2 is a sectional view of the panel, taken along the sectional plane II-II of Figure 1;
Figure 3 is a front view of the panel according to Figure 1;
Figure 4 is a view of the panel of Figure 1, turned over at one end;
Figure 5 is a view of a constructive variation of the panel;
Figure 6 is a front view of the panel of the preceding figure.

In the exemplary embodiments that follow, individual characteristics, given in relation to specific examples, may actually be interchanged with other different characteristics that exist in other exemplary embodiments.

With reference to the figures, the reference numeral 1 designates a thermoacoustic soundproofing panel that is used for vertical walls, such as walls of dwellings, or partitions or movable walls, or for floor-mounted horizontal walls, with a footsteps noise prevention function, or for flat or inclined roofs, or for fire doors, or in the industrial sector where machines with a high decibel index persist.

The panel 1 is constituted by at least one first mat 2 and at least one second mat 3, each provided with a plurality of individual and distinct pockets 4, which are mutually adjacent and are filled with an inert material 5, such as sand in general, such as fine sand, medium-fine sand and/or coarse or even ordinary fine, medium-fine or coarse soil; in any case, inert materials which have a relative density which can range from 800 kg/m³ to 1700 kg/m³ are preferred.

The various pockets 4 are mutually independent but are connected and divided sequentially from each other by means of first horizontal bands 6 and second vertical bands 7 which are obtained by thermoforming or other known connection methods such as for example sewing or others.

The dimension and shape of each pocket, both in the first mat 2 and in the second mat 3, can vary as a function of specific requirements.

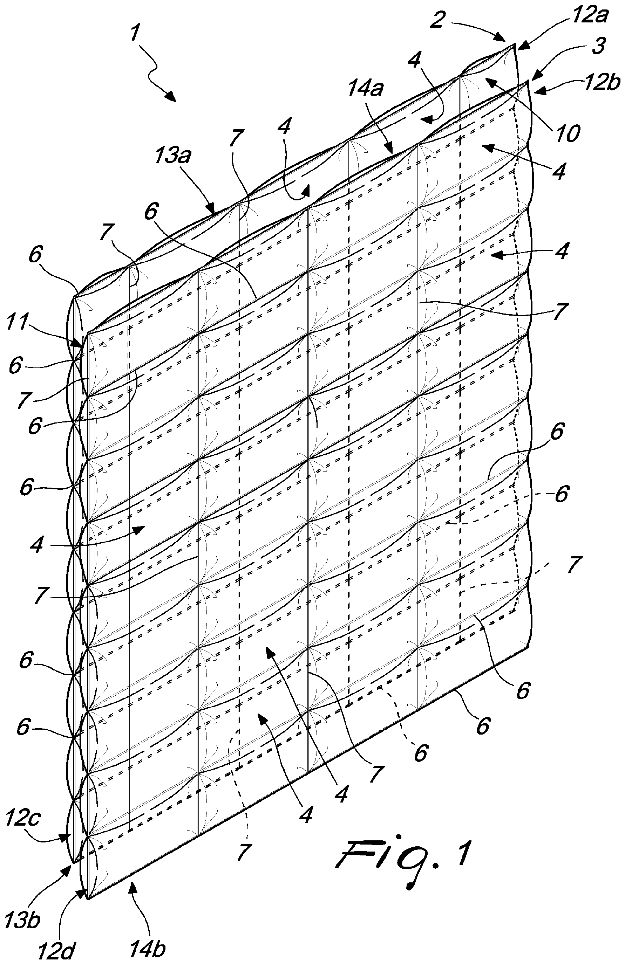

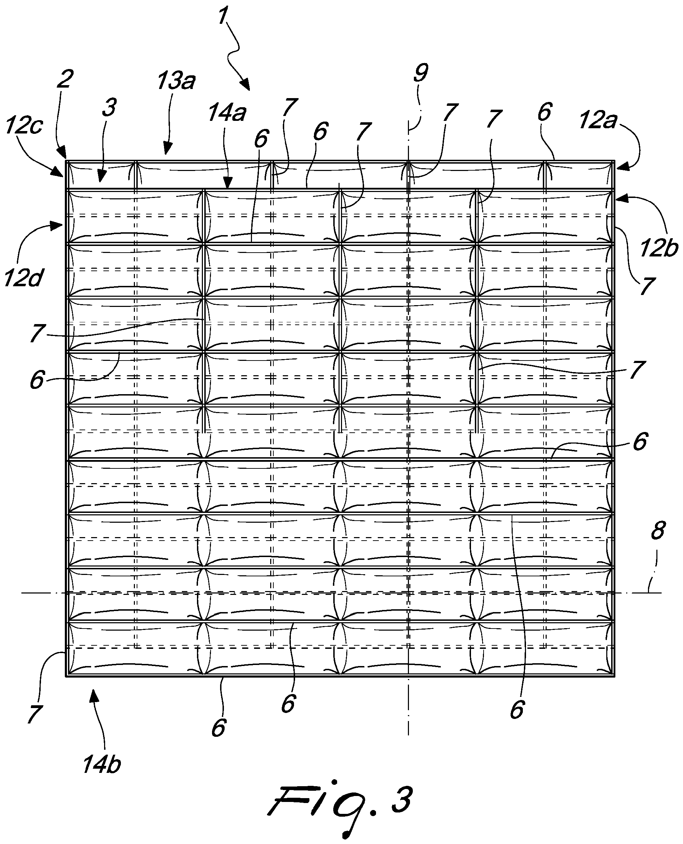

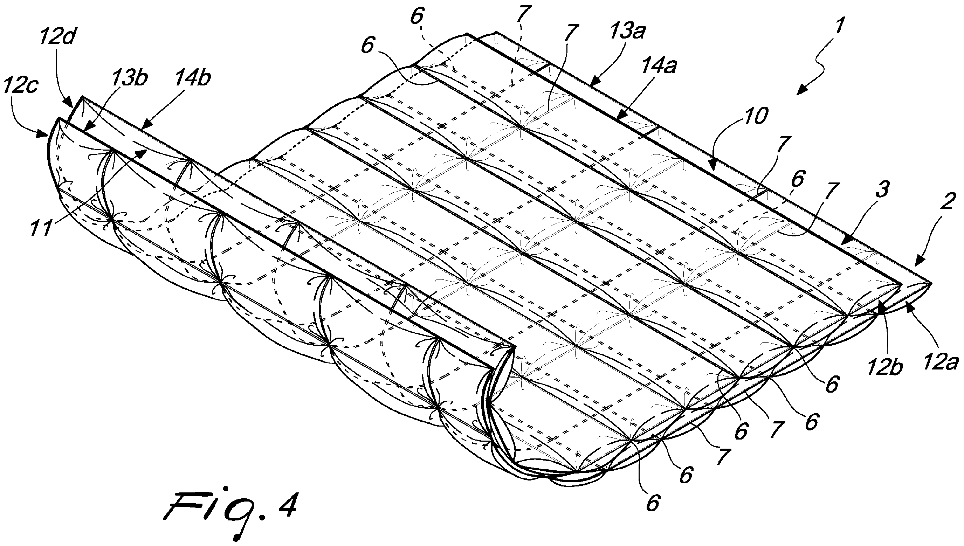

In the first embodiment shown in Figures 1 to 4, pockets 4 have been preferably considered which substantially have the same rectangular shape, the same height, but do not all have the same size in terms of width, the pockets 4 of the first mat 2 that are arranged at the ends of the panel 1 being narrower than the corresponding ones of the second mat 3 once they are assembled to constitute the panel 1.

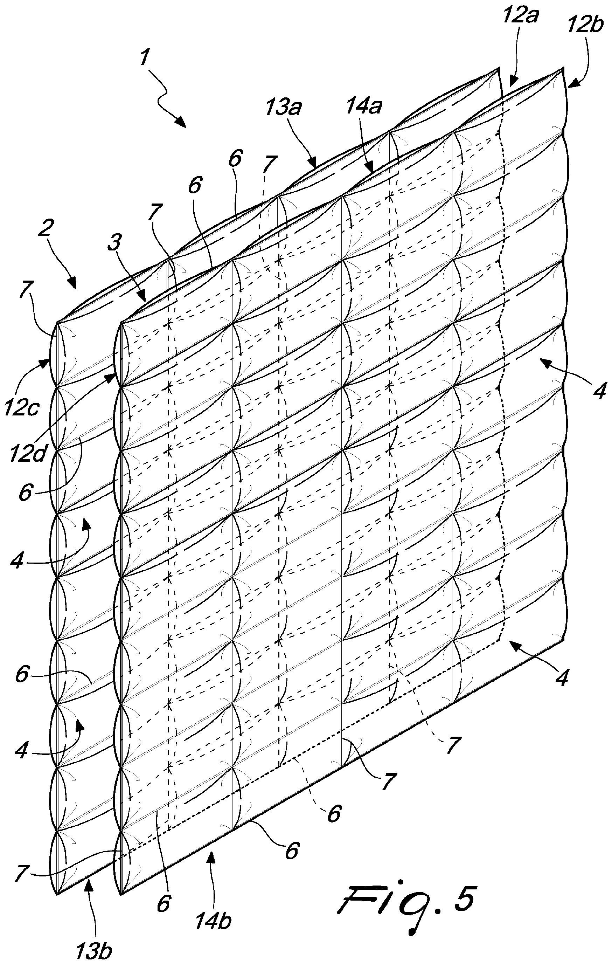

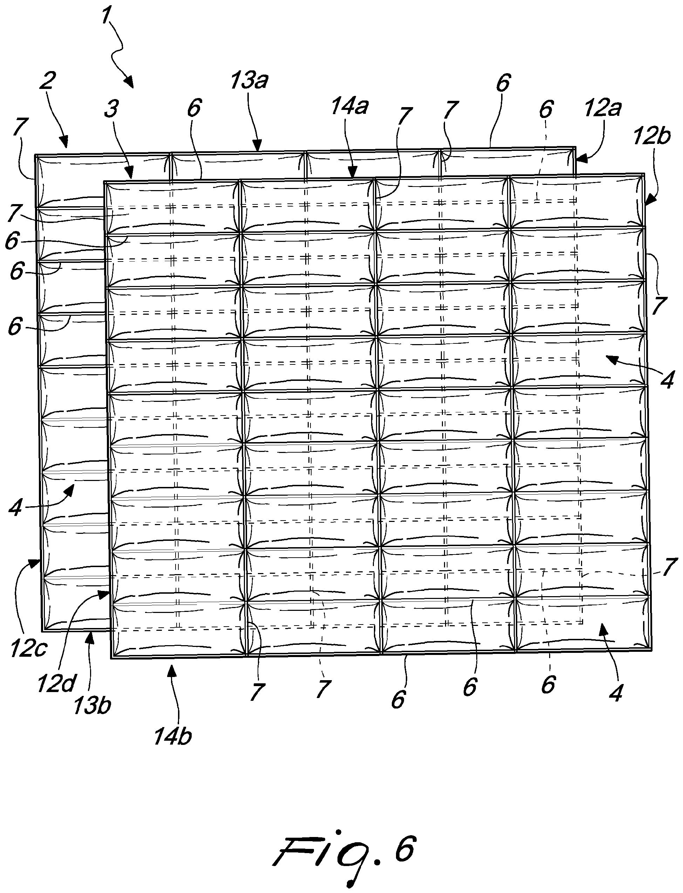

In the embodiment shown in Figures 5 and 6, all the pockets 4 of the first and second mats are identical in terms of shape and size.

In both embodiments, the first and second mats 2, 3 are mutually adjacent and are mutually offset along a horizontal axis 8 and/or a vertical axis 9 by a chosen space.

A consequence of this is the fact that in the panel 1, once the first and second mats 2, 3 have been mutually assembled for example by mutual adhesive bonding of the respective lateral surfaces 10, 11 arranged mutually adjacent beforehand, there are substantially coinciding vertical lateral edges 12a, 12b, 12c, 12d which substantially coincide for the first and second mats 2, 3, while for the first mat 2 there are horizontal perimetric edges 13a, 13b which are offset with respect to the horizontal perimetric edges 14a, 14b of the second mat 3.

The first horizontal bands 6 and the second horizontal vertical bands 7 are likewise offset.

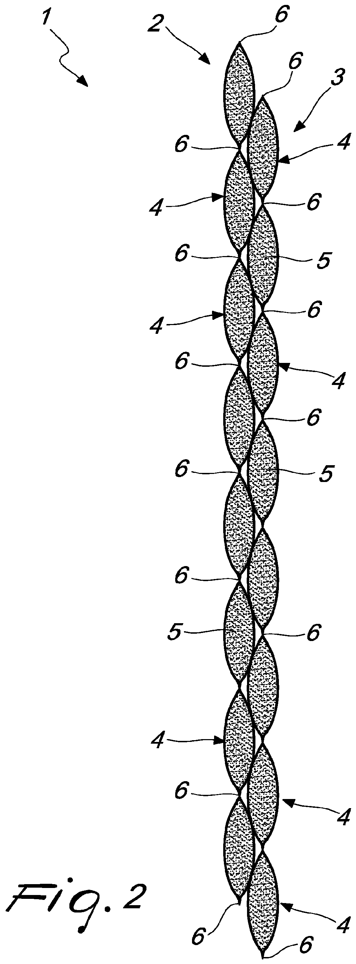

By doing so, as shown in Figure 2, the first mat 2 has the regions affected by the first horizontal bands 6 and by the second vertical bands 7 which are offset with respect to those of the second mat 3, except for the vertical lateral edges 12a, 12b, 12c, 12d of the panel 1.

Since the regions on which the first horizontal bands 6 and the second vertical bands 7 act are regions in which noise may be transmitted more easily, in the panel 1 thus obtained the thickest pocket portion 4 is to the side of each one of said first horizontal bands 6 and second vertical bands 7 except for the horizontal lateral edges 13a, 14a and 13b, 14b.

In this manner, the panel 1 has a great uniformity in retaining noise.

The assembly of the first mat 2 to the second mat 3, so as to constitute the panel 1, can occur, as an alternative to or in combination with thermoforming, by sewing the respective horizontal lateral edges 13a, 14a and 13b, 14b to a strap (not shown) made of a chosen fabric which connects them.

Multiple panels 1 can then be used by superimposing them vertically on each other so as to arrange the horizontal lateral edge 13a, 13b of one at the lateral horizontal lateral edge 14b, 14a of the other.

In Figures 5 and 6, all the pockets 4 of the first and second mats 2, 3 are identical in shape and size; the offset therefore leads to the forming, for the panel 1, of protruding portions of an individual mat at the four sides; this allows an optimum overlap of multiple panels, having, at each side, the arrangement of the first horizontal bands 6 and of the second vertical bands 7 at the thicker pocket portion 4.

It has thus been found that the invention has achieved the intended aim and objects, a thermoacoustic soundproofing panel having been obtained which in addition to having optimum characteristics of absorption of all the sound waves that are incident thereon, is at the same time applicable rapidly and simply also within civil or industrial dwellings or roofs or fire doors, adapting itself to the shape of the places in which it is installed.

Furthermore, the thermoacoustic soundproofing panel has modest storage and transport costs, since it can also be rolled up and furthermore can be installed rapidly and simply, being easy to handle and install even by personnel that is not particularly trained.

By virtue of the offset between the two mats, furthermore, the forming of regions in which noise may penetrate is avoided.

Finally, the panel can be made of a material that has high fire resistance characteristics.

The invention is of course susceptible of numerous modifications and variations, all of which are within the scope of the same appended claims.

The materials used, as well as the dimensions that constitute the individual components of the invention, may of course be more pertinent according to the specific requirements.

The characteristics indicated as advantageous, convenient or the like may also be omitted or be replaced with equivalents.

The disclosures in Italian Patent Application No. 102017000058435 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A thermoacoustic soundproofing panel (1), **characterized in that** it is constituted by at least one first mat and one second mat (2, 3), each provided with individual and distinct pockets (4), which are mutually adjacent and are filled with an inert material (5), said at least one first mat and one second mat (2, 3) being mutually adjacent and mutually offset along a horizontal axis (8) and/or a vertical axis (9).

2. The panel according to claim 1, **characterized in that** said inert material (5) has a relative density that can range from 800 kg/m³ to 1700 kg/m³, such as fine sand and/or medium-fine sand and/or coarse sand and/or fine, medium-fine or coarse soil.

3. The panel according to claims 1 and 2, **characterized in that** said pockets (4) are mutually independent but are connected and divided sequentially from each other by means of first horizontal bands (6) and second vertical bands (7) which are obtained by thermoforming or other known connection methods such as sewing or others.

4. The panel according to claims 1 and 2, **characterized in that** said pockets (4) substantially have the same rectangular shape, the same height, but do not all have the same dimension in terms of width, said pockets (4) of said first mat (2) arranged at the ends of said panel (1) being narrower than the corresponding ones of said second mat (3) once they are assembled to constitute said panel (1).

5. The panel according to claims 1 and 2, **characterized in that** said pockets (4) substantially have the same shape, the same height and the same dimension in terms of width.

6. The panel according to one or more of the preceding claims, **characterized in that** said first and second mats (2, 3) are mutually adjacent and mutually offset both along said horizontal axis (8) and along said vertical axis (9) by a chosen space.

7. The panel according to one or more of the preceding claims, **characterized in that** said panel (1), once said first and second mats (2, 3) have been mutually assembled, preferably by mutual adhesive bonding of respective lateral surfaces (10, 11) arranged mutually adjacent beforehand, is provided with vertical lateral edges (12a, 12b, 12c, 12d) which substantially coincide for said first and second mats (2, 3), while it has, for said first mat (2), horizontal perimetric edges (13a, 13b) which are offset with respect to horizontal perimetric edges (14a, 14b) of said second mat (3).

8. The panel according to one or more of the preceding claims, **characterized in that** said first horizontal bands (6) and said second vertical bands (7) of said assembled first and second mats (2, 3) are mutually offset, said first mat (2) having the regions affected by said first horizontal bands (6) and by said second vertical bands (7) offset with respect to those of said second mat (3), except for said vertical lateral edges (12a, 12b, 12c, 12d) of said panel (1).

9. The panel according to one or more of the preceding claims, **characterized in that** laterally to most or all of said first horizontal bands (6) and said second vertical bands (7) there is the portion of one of said pockets (4) that is thicker.

10. The panel according to one or more of the preceding claims, **characterized in that** all of said pockets (4) of said first and second mats (2, 3) are identical in shape and size, an offset in the assembly of said first and second mats (2, 3) forming protruding portions for each mat (2, 3) at the four sides.
